Europäisches Patentamt

European Patent Office

Office européen des brevets

(19)

(11) Veröffentlichungsnummer: **0 024 448**
**B1**

(12) **EUROPÄISCHE PATENTSCHRIFT**

(45) Veröffentlichungstag der Patentschrift: **09.03.83**

(21) Anmeldenummer: **79103183.4**

(22) Anmeldetag: **29.08.79**

(51) Int. Cl.³: **B 60 L 1/00,** G 05 F 3/06,
H 02 J 7/00, H 02 J 9/06,
H 02 M 1/10

(54) Einrichtung zur Versorgung von Nutzverbrauchern, insbesondere in einem Schienenfahrzeug.

(43) Veröffentlichungstag der Anmeldung:
**11.03.81 Patentblatt 81/10**

(45) Bekanntmachung des Hinweises auf die Patenterteilung:
**09.03.83 Patentblatt 83/10**

(84) Benannte Vertragsstaaten:
**AT BE CH DE FR IT LU NL**

(56) Entgegenhaltungen:
AT - B - 329 679
CH - A - 463 568
DE - A - 2 424 032
DE - A - 2 456 192
DE - A - 2 558 949
DE - B - 1 292 697
DE - B - 1 803 221
DE - B - 1 928 282
FR - A - 2 383 840

(73) Patentinhaber: **Fried. Krupp Gesellschaft mit
beschränkter Haftung
Altendorfer Strasse 103
D-4300 Essen 1 (DE)**

(72) Erfinder: **Seeger, Herbert
Langeoogweg 1
D-4300 Essen 1 (DE)**

(56) Entgegenhaltungen:
**JOURNAL OF THE INSTITUTION OF
ELECTRONICS AND TELECOMMUNICATION
ENGINEERS, Band 20, Nr. 1—2, Januar/Februar
1974, New Delhi B. R. PRABHU et al. "A design
basis for ferro-resonant parallel inverters with
silicon controlled rectifiers" Seiten 50 bis 53
ETR—EISENBAHNTECHNISCHE RUNDSCHAU,
Band 19, Nr. 6, 1970, W. GÜNTHNER et al.
"Thyristorwechselrichter mit geregelter
Ausgangsspannung für Fluoreszenzbeleuchtung
in Schienenfahrzeugen" Seiten 226 bis 229**

Courier Press, Leamington Spa, England.

Einrichtung zur Versorgung von Nutzverbrauchern
insbesonders in einem Schienenfahrzeug

Die Erfindung bezieht sich auf eine Energieversorgungseinrichtung gemäß dem Oberbegriff des Patentanspruchs für in einem Schienenfahrzeug sich befindende Nutzverbraucher, die aus einem elektrischen Netz über einen einen statischen Wechselrichter aufweisenden und eine konstante Ausgangsspannung liefernden Umformer gespiest werden, wobei der Wechselrichter eingangsseitig an eine Bordbatterie anschließbar ist.

Aus der "ETR-Eisenbahntechnische Rundschau" 19, (1970), Seiten 226 bis 229 ist eine Energievorsorgungseinrichtung für in einem Schienenfahrzeug sich befindende Leuchten bekannt, bei der ein Umformer einen magnetischen Spannungskonstanthalter aufweist, der eine konstante Ausgangsspannung bei Netzspannungsschwankungen liefert. Der Wechselrichter ist an das Bordnetz des Schienenfahrzeugs angeschlossen und bezieht die Energie bei Netzspannungsausfall bzw. -unterbrechung aus einer Bordbatterie. Würden an diese Energieversorgungseinrichtungen Motoren angeschlossen, so müßte—da Leuchten wenig Energie aber Motoren viel Energie benötigen—eine große und schwere Bordbatterie eingesetzt werden.

Aus der FR—A—2 383 540 ist eine Energieversorgungseinrichtung für einen Motor bekannt, bei der der Anlaufstrom des Motors begrenzt wird. Die Anlaufstrombegrenzung erfolgt durch einem dem Wechselrichter vorgeschalteten Eingangswiderstand. Durch den Eingangswiderstand wird der Anlaufstrom des Motors gedämpft bzw. begrenzt. Nach dem Hochlauf des Motors wird der Eingangswiderstand durch einen Kontakt (Schließer eines Schützes) kurzgeschlossen. Würde an diese Energieversorgungseinrichtung Leuchten angeschlossen werden, so würden die Lampen der Leuchten—da diese Energieversorgungseinrichtung nur an das Bahnnetz angeschlossen werden kann—bei Netzspannungsausfall kein Licht mehr abgeben und bei Netzspannungsunterbrechungen (Fahrbügelspringen) würde das Licht der Lampen kurzzeitig erlöschen. Außerdem würde die Anlaufstrombegrenzung bei Spannungsrückkehr zum Einsatz kommen, wodurch die Lampen der Leuchten nicht mit ihrer Nennspannung versorgt werden und dadurch währen der Anlaufphase nur ein schwaches Lifth abgeben.

Weiterhin ist aus der DE—A1—24 56 192 eine Energieversorgungseinrichtung mit einem Wechselrichter bekannt, bei der der Wechselrichter aus dem Bahnnetz oder bei Netzspannungsunterbrechung bzw. -ausfall aus der Bordbatterie mit Spannung versorgt wird. Zwischen die Bordbatterie und dem Eingang des Wechselrichters ist ein Gleichspannungswandler (Taktgeber und Gleichrichter) geschaltet. Über den Gleichspannungswandler wird der Wechselrichter bei Netzspannungsunterbrechung mit seiner Eingangsnennspannung versorgt, wodurch die Thyristoren des Wechselrichters nicht außer Tritt geraten können und bei Netzspannungsrückkehr sich kein Kurzschluß im Wechselrichter ausbilden kann. Außerdem ist eine Überwachungseinrichtung vorgesehen, wodurch der Wechselrichter erst dann an das Bahnnetz angeschlossen wird, wenn die Ausgangsspannung des Wechselrichters ihren Neenwert erreicht hat. An der Bordbatterie ist das Bordnetz angeschlossen. Die Bordnetzeinspeisung erfolgt entweder aus dem Eisenbahnnetz oder bei Netzspannungsunterbrechung, bzw. Netzspannungsausfall aus der Bordbatterie. Da alle Verbraucher an das Bordnetz angeschlossen sind, müßte die Batterie so groß gewählt werden, daß alle Verbraucher bei Netzpannungsausfall mit Energie versorgt werden können. Da Bordbatterien großer Kapazität auch ein großes Gewicht aufweisen, muß mit Antriebsverlusten des Zuges bei Beschleunigungsphasen und Bergfahrten gerechnet werden.

Nichts anderes kann man der Energieversorgungseinrichtung nach der DE—B—12 92 697 entnehmen, bei der alle Verbraucher bei Netzspannungsausfall aus der Speicherbatterie mit Energie versorgt werden.

Hier will die Erfindung Abhilfe schaffen. Die Erfindung, wie sie im Anspruch gekennzeichnet ist, löst die Aufgabe, eine Energieversorgungseinrichtung für in einem Schienenfahrzeug sich befindende Nutzverbraucher zu schaffen, bei der die Bordbatterie nur eine kleine Kapazität und dadurch auch ein kleines Gewicht aufweist, da nur die Leuchten bei Einspeisung aus der Bordbatterie mit Energie versorgt werden.

Die durch die Erfindung erreichten Vorteile sind im wesentlichen darin zu sehen, daß durch den Einsatz des Gleichspannungswandlers die Leuchten auch bei Netzspannungsunterbrechungen bzw. Netzspannungsausfall weiterhin über den Wechselrichter mit Energie versorgt werden; außerdem kann der Wechselrichter nicht außer Tritt geraten. Da die viel Energie verbrauchenden Motoren bei Netzspannungsausfall bzw. -unterbrechung zwangsabgeschaltet werden, braucht die Bordbatterie nicht groß zu sein.

Zwei Ausführungsbeispiele der Erfindung sind in der Zeichnung dargestellt und werden im folgenden näher beschrieben.

Fig. 1 ein Schaltbild einer Energieversorgungsanlage mit einem Wechselrichter und einem Spannungskonstanthalter für Wechselstromverbraucher,

Fig. 2 ein Schaltbild einer Energieversorgungsanlage mit drei Wechselstrom-Wechselrichter in Mittelpunktschaltung und drei Spannungskonstanthaltern für Wechsel- und Drehstromverbraucher,

Fig. 3 Liniendiagramme der Zündimpulse für die drei Wechselstrom-Wechselrichter und

Fig. 4 Liniendiagramm der Wechselspannungen, die die Spannungskonstanthalter liefern.

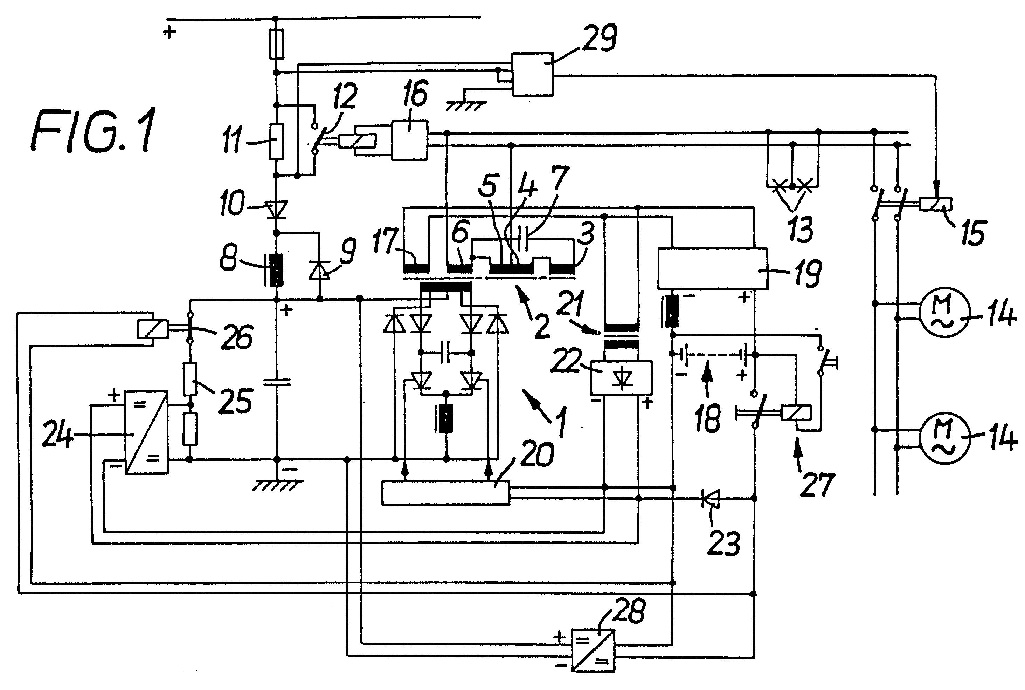

Die in Fig. 1 der Zeichnung dargestellte Energieversorgungseinrichtung weist einen Wechselrichter 1 auf, dessen an sich bekannter Wechselrichter-Transformator 2 sekundarseitig mehrere Wicklungen aufweist und die so miteinander verbunden sind, daß ein magnetischer Spannungskonstanthalter gebildet wird. In Fig. 1 ist das rechts dargestellte Wicklungsstück eine Oberwellenkompensationswicklung 3, links von dieser Wicklung, sowie mit dieser verbunden, ist eine Resonanzwicklung 4 und eine Ausgangswicklung 5 und noch weiter links ist eine Kompensationswicklung 6. Die Kompensationswicklung 6 und die Ausgangswicklung 5 bilden den Ausgang des Spannungskonstanthalters. Ein Resonanzkondensator 7 überbrückt die Wicklungen 3, 4 und 5. Der Transformatorkern besitzt zwei Streuluftspalte. Diese sind geometrisch so angeordnet, daß nur die Kompensationswicklung 6 mit der Primärwicklung magnetisch fest gekoppelt ist. Die Ausgangswicklung 5 und die Resonanzwicklung 4 sind miteinander fest gekoppelt sowie mit der Kompensationswicklung 6 bzw. Primärwicklung lose gekoppelt. Die Oberwellen-Kompensationswicklung 3 ist gegenüber den vorgenannten Wicklungen lose gekoppelt.

Durch diesen Aufbau des Wechselrichter-Transformators 2 und des Betriebes im Sättigungsbereich des Transformatorkernmaterials wird erreicht, daß, wenn die Wechselrichtereingangsspannung bis zu $\pm30\%$ vom Nennwert abweicht, die Ausgangsspannung aber nur maximal 5% vom Nennwert abweicht. Die Nennausgangsspannung beträgt 220 V.

Der Wechselrichter besitzt zwei Thyristoren, zwei Sperrdioden, zwei Freilaufdioden, einen Kommutierungskondensator und eine Kommutierungsdrossel.

Der Wechselrichter 1 ist einerseits mit seiner primärseitigen Mittenanzapfung über eine Drossel 8, zu der ein Freilaufventil 9 parallel geschaltet ist, über eine Netzentkopplungsdiode 10, über einen Eingangswiderstand 11, zu dem ein Eingangswiderstandsüberbrückungskontakt 12 parallel geschaltet ist, und über einen Sicherung mit dem Pluspol des elektrischen Netzes und andererseits mit seiner Kommutierungsdrossel mit dem Minuspol des elektrischen Netzes verbunden. Parallel zum Eingang des Wechselrichters 1 liegt ein Hochleistungskondensator.

An dem Ausgang des Wechselrichters 1 bzw. des Spannungskonstanthalters sind Leuchten 13 direkt und Motoren 14 über ein Schütz 15 angeschlossen. Außerdem ist am Ausgang des Spannungskonstanthalters ein Komparator 16 angeschlossen, der mit dem den Eingangswiderstandsüberbrückungskontakt 12 aufweisenden Schütz in Verbindung steht.

Der Wechselrichter 1 besitzt außer den Wicklungen des Spannungskonstanthalters eine zweite Ausgangswicklung 17, über die ein Bordbatterie 18 mittels eines Batterieladegeräts 19 und ein für den Wechselrichter 1 dienender Taktgeber 20 mittels eines Transformators 21 eines Gleichrichtergerätes 22 mit Energie versorgt wird.

Der Taktgeber 20 ist eingangsseitig auch über eine Entkopplungsdiode 23 mit der Bordbatterie 18 und auch mit einem Hilfsgleichspannungswandler 24 verbunden. Dieser Hilfsgleichspannungswandler 24 ist eingangsseitig mittels eines ohmschen Spannungssteilers 25 und einem Ruhestromkontakt 26 parallel zum Eingang des Wechselrichters 1 geschaltet. Der Ruhestromkontakt 26 steht mittels einer Spule mit der Bordbatterie 18 in Verbindung und wird betätigt, wenn die Spannung an der Bordbatterie einen bestimmten Wert überschreitet.

Der Pluspolausgang der Bordbatterie 18 ist über eine Inbetriebnahmeeinrichtung 27, bestehend aus einem Schalter und einem Schütz, geführt. Das Schütz besitzt ein mechanisches Stellglied, mittels dem es von Hand aus, wenn die Bordbatterie 18 spannungslos ist, betätigbar ist.

Zwischen der Bordbatterie 18 und dem Eingang des Wechselrichters 1 ist eine Rückspeiseeinrichtung, bestehend aus einem Gleichspannungswandler 28, angeordnet.

Die Höhe der Netzspannung wird durch einen Schwellspannungsmeßgeber 29 ermittelt; außerdem mißt dieser Schwellspannungsmeßgeber 29 die Spannung, die am Eingangswiderstandsüberbrückungskontakt 12 ansteht. Dieser Schwellspannungsmeßgeber 29 steht mit dem den Motoren 14 vorgeschalteten Schütz 15 in Verbindung und schaltet das Schütz ein, wenn Netzspannung anliegt und der Eingangswiderstand 11 kurzgeschlossen ist.

Diese Energieversorgungsrichtung arbeitet wie folgt: Soll die Anlage in Betrieb gesetzt werden, so wird der Schalter der Inbetriebnahmeeinrichtung 27 manuell betätigt, und die Bordbatterie ist mit mehreren Geräten (20, 28; 26) verbunden. Der Ruhestromkontakt 26 befindet sich in seiner Ausgangslage, und der Hilfsgleichspannungswandler 24 wird vom Netz mit Gleichspannung versorgt. Der Hilfsgleichspannungswandler 24 versorgt den Taktgeber 20 des Wechselrichters 1. Der Wechselrichter 1 beginnt zu arbeiten, und die Bordbatterie 18 und die Leuchten werden mit Energie versorgt.

Hat die Spannung am Ausgang des Konstanthalters die Nennspannung erreicht, so löst der Komparator 16 ein Signal aus, wodurch der Eingangswiderstand 11 kurzgeschlossen wird. Durch das Kurzschließen des Eingangswiderstandes löst der Schwellspannungsmeßgeber 29, wenn die Netzspannung nicht kleiner als 30% unter der Netznennspannung liegt, ein Signal aus, wodurch das Schütz 15 anzieht und die Motoren 14 in Betrieb genommen werden.

Der Taktgeber 20 wird solange über den Hilfsgleichspannungswandler 24 mit Energie versorgt, bis die Spannung an der Bordbatterie 18 auf einen bestimmten Wert angestiegen ist und der Ruhekontakt 26 geöffnet wird. Ist vor Inbetriebnahme der Energieversorgungsanlage die Batterie voll geladen, so wird der Taktgeber 20 von der Bordbatterie 18 mit Energie versorgt.

Es sei angenommen, daß die Netzspannung (750 V) kurzzeitig ausfällt. In diesem Fall erfolgt die Versorgung der Leuchen 13 aus der Bordbatterie 18 (24 V) über den Gleichspannungswandler 28 (Ausgangsspannung=500 V) und den Wechselrichter 1. Dabei ist die Ausgangsspannung des Spannungskonstanthalters etwas kleiner als bei Netzbetrieb. Dadurch wird der Eingangsüberbrückungskontakt 12 mittels des Komparators 16 geöffnet. Der Schwellspannungsmeßgeber 29 schaltet das Schütz 15 ab; die Motoren 14 werden spannungslos. Dadurch kann die Bordbatterie klein dimensioniert werden. Eine Rückspeisung in das Netz verhindert die Netzentkopplungsdiode 10. Bei Wiederkehr der Netzspannung wiederholen sich die Vorgänge entsprechend wie oben zur Inbetriebnahme beschrieben.

Bei kurzzeitigem Absinken der Spannung an der Bordbatterie 18 bei Netzbetrieb wird der Taktgeber 20 von der Bordbatterie 18 mit Energie versorgt, weil der Ruhestromkontakt 26 mit Trägheit behaftet ist. Dadurch ist gewährleistet, daß der Taktgeber 20 nicht spannungslos wird und der Wechselrichter 1 außer Tritt gerät.

Sinkt die Netzspannung unter 30% der Nennspannung, so übernimmt die Bordbatterie 18 die Energieversorgung der Leuchten 13.

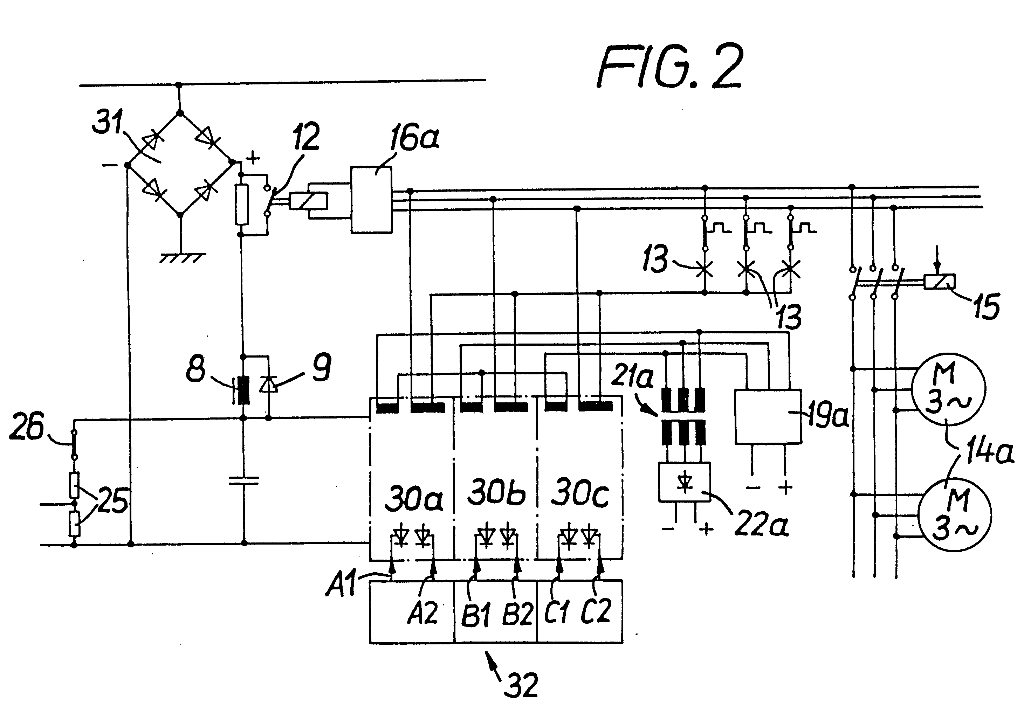

Die Energieversorgungseinrichtung nach Fig. 2 unterscheidet sich von der Energieversorgungseinrichtung nach Fig. 1 lediglich dadurch, daß aus Drehstromverbraucher mit Energie versorgt werden und daß die Energie aus einem Wechselspannungsnetz entnommen wird.

Die in Fig. 2 dargestellt Energieversorgungseinrichtung weist drei Wechselstrom-Wechselrichter 30a, 30b, 30c auf. Jeder dieser Wechselstrom-Wechselrichter 30a, 30b, 30c ist so aufgebaut, wie es in Fig. 1 dargestellt ist. Das gleiche gilt auch für die Spannungskonstanthalter. Die Ausgänge der Wicklungen der Wechselrichter 30a, 30b, 30c und der Spannungskonstanthalter sind jeweils in Stern geschaltet. Für die Versorgung der Nutzverbraucher ist der nicht näher bezeichnete Mittelpunktleiter herausgeführt, so daß die Leuchten 13 mit einer Spannung von 220 V und die Motoren 14a mit 380 V versorgt werden.

Am Eingang der Energieversorgungseinrichtung ist eine Gleichrichteranordnung 31 (Graetzbrücke) angeordnet, die die Netzspannung in eine Gleichspannung umformt. Die Gleichrichteranordnung 31 dient gleichzeitig auch zur Netzentkopplung bei Speisung aus der Bordbatterie 18.

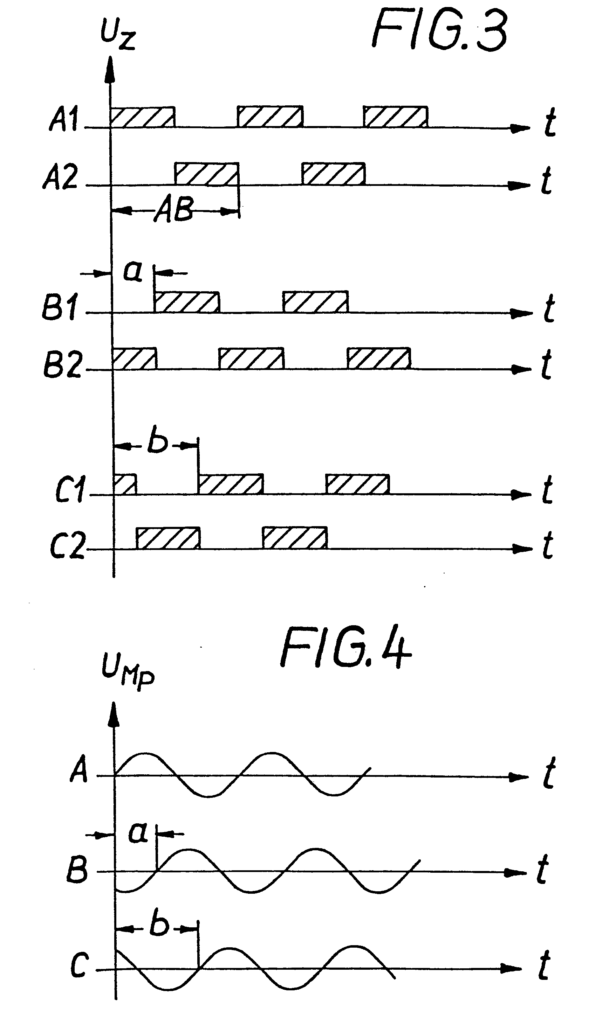

Die Wechselrichter 30a, 30b, 30c werden mittels eines Dreikanaltaktgebers 32 angesteuert. Der erste Kanal A1 des Dreikanaltaktgebers 32 steuert den in Fig. 2 links dargestellten Thyristor des ersten Wechselstrom-Wechselrichters 30a an. Gleichzeitig wird auch der zweite Kanal des Dreikanaltaktgebers 32 angesteuert. Dieser Kanal B 1 zündet den in Fig. 2 links dargestellten Thyristor des zweiten Wechselstrom-Wechselrichters 30b. Der Zeitabstand zwischen beiden Zündimpulsen ist in Fig. 3 durch die Strecke a angedeutet. Der erste Kanal des Dreikanaltaktgebers 32 steuert außerdem auch noch den dritten Kanal an. Der Zeitabstand zwischen dem vom ersten Kanal und dem Zündimpuls vom Dritten Kanal ist in Fig. 4 durch die Strecke b angedeutet. Nach einer bestimmten Zeit wird der in Fig. 2 rechts dargestellte Thyristor des ersten Wechselstrom-Wechselrichters 30a gezündet. Die entsprechenden anderen Thyristoren werden wie vorher beschrieben gezündet. Danach wieder die linken Thyristoren usw.

Werden die Thyristoren, wie eben beschrieben, angesteuert, so entstehen folgende Spannungen am Ausgang der einzelnen Spannungskonstanthalter: A1 und A2 geben wechselweise Impulse ab (Fig. 3). Es entsteht eine sinusförmige Wechselspannung wie in Fig. 4, oberstes Liniendiagramm, dargestellt. Da der zweite Wechselstrom-Wechselrichter 30b zeitlich phasenverschoben angesteuert wird, gibt er auch eine phasenverschobene Sinusspannung ab. Dies ist in Fig. 4, mittleres Liniendiagramm, dargestellt. Die Strecke a in Fig. 4 bedeutet, daß die letztgenannte Wechselspannung 120° elektrisch phasenverschoben ist. Für den dritten Wechselstrom-Wechselrichter 30c gilt entsprechend das gleiche, wie eben beschrieben, nur daß die Phasenverschiebung 240° elektrisch beträgt.

Die Energieversorgungseinrichtung nach Fig. 2 arbeitet genauso wie die Energieversorgungseinrichtung nach Fig. 1 bis auf den vorgenannten Unterschied; die gleichen Teile sind in Fig. 2 weggelassen worden.

Diese Energieversorgungseinrichtungen sind insbesondere für Eisenbahn-, Straßenbahn- und Untergrundfahrzeuge vorgesehen, die beispielsweise an Netze angeschlossen werden, die eine Gleichspannung von 750 V, 1500 V oder 3000 V besitzen, oder an Wechselspannungsnetze von 1000 V oder 1500 V.

**Patentanspruch**

Energieversorgungseinrichtung mit einem aus einem elektrischen Netz speisbaren und einen statischen Wechselrichter (1; 30a, 30b, 30c) aufweisenden Umformer für Netzverbraucher, zu denen auch Motoren (14) gehören, insbesondere für in einem Schienenfahrzeug sich befindende Leuchten (13), Motoren (14) sowie ein Batterieladegerät (19) wobei der Umformer bei Schwankungen der Netzspannung eine nahezu konstante Ausgangsspannung liefert und der Wechselrichter (1; 30a, 30b, 30c) wenigstens einen Wechselrichter-Transformator (2) aufweist, der wenigstens einen Streuluftspalt und dessen sekundärseite einen Spannungskonstanthalter besitzt, der eine Kompensations-, eine Resonanz- und eine Ausgangswicklung (6, 4, 5) und einen Resonanzkondensator (7) sowie eine Oberwellenkompensationswicklung (3) aufweist, und wobei der Wechselrichter (1; 30a, 30b, 30c) eingangsseitig an eine Bordbatterie (18) anschließbar ist, dadurch gekennzeichnet, daß zwischen die Bordbatterie (18) und dem Eingang des Wechselrichters (1; 30a, 30b, 30c) ein Gleichspannungswandler (28) geschaltet ist, der eine Ausgangsspannung liefert, die kleiner als die Netzspannung ist, wodurch die Ausgangsspannung des Wechselrichters (1; 30a, 30b, 30c) bei Netzspannungsausfall kleiner ist als seine Nennspannung, daß dem Wechselrichter (1; 30a, 30b, 30c) in der netzseitigen Einspeisung in Eingangswiderstand (11) sowie ein dazu parallel geschalteter Eingangswiderstandsüberbrückungskontakt (12) vorgeschaltet ist, wobei der Eingangswiderstandsüberbrückungskontakt (12) der Schließer eines Relais ist, das an dem Ausgang eines Komparators (16) angeschlossen ist, daß der Komparator (16) mit seinem Eingang an dem Ausgang des Wechselrichters (1; 30a, 30b, 30c) angeschlossen ist, und ein Signal abgibt, wenn die Ausgangsspannung des Wechselrichters (1; 30a, 30b, 30c) den Ausgangsspannungsnennwert erreicht hat, wodurch der Schließer des Relais geschlossen wird, und daß ein Schwellspannungsmeßwertgeber (29) vorgesehen ist, der eingangsseitig an das Netz und an den Eingangswiderstand (11) angeschlossen ist und von dessen Ausgang ein den Motoren (14) vorgeschaltetes Schütz (15) ansteuerbar ist wodurch die Motoren (14) in Betrieb gesetzt werden, wenn sowohl die Netzspannung anliegt als auch der Eingangswiderstand (11) kurzgeschlossen ist.

### Claim

Power supply installation comprising a converter which can be fed from an electric supply system and which exhibits a static inverter (1; 30a, 30b, 30c), for loads which also include motors (14)—in particular for lamps (13), motors (14) and a battery charger in a rail vehicle, the converter, given variations in the input voltage, delivering an almost constant output voltage and the inverter (1; 30a, 30b, 30c) featuring at least one inverter/transformer (2), which has at least one leakage gap and whose secondary circuit is equipped with a voltage stabilizer featuring compensation, resonance and output windings (6, 4, 5), a resonance capacitor (7) and harmonics compensation winding (3), and the input side of the inverter (1; 30a, 30b, 30c) being arranged so that it can be connected to the onboard battery, characterized in that a DC to DC converter (28) delivering an output voltage lower than that of the input power supply is arranged between the onboard battery (18) and the input side of the inverter (1; 30a, 30b, 30c), whereby the output voltage of the inverter (1; 30a, 30b, 30c) on input power failure is lower than its rated voltage, in that an input resistance (11) and an input resistance by-pass contact connected in parallel thereto are arranged on the power input side of the inverter (1; 30a, 30b, 30c), the input resistance by-pass contact (12) being the make contact of a relay which is connected to the output side of a comparator (16), in that the input comparator (16) is connected to the output of the inverter (1; 30a, 30b, 30c) and emits a signal when the output voltage of the inverter (1; 30a, 30b, 30c) reaches the rated value of the output voltage, whereby the make contact of the relay is closed, and in that a threshold voltage measuring element (29) is provided, which is connected on the input side to the electricity supply and to the input resistance (11) and from whose output side a contacter arranged in the supply circuit of the motors can be activated to operate the motors (14) when both the power is applied and the input resistance short-circuited.

### Revendication

Dispositif d'alimentation en énergie électrique comportant un convertisseur pouvant être alimenté à partir d'un secteur électrique et comprenant un convertisseur en courant alternatif statique (1; 30a, 30b, 30c), le dispositif étant prévu pour des appareils de consommation d'énergie électrique comprenant également des moteurs (14), en particulier des lampes (13), des moteurs (14) ainsi qu'un chargeur de batterie (19) se trouvant dans un véhicule sur rails, le convertisseur délivrant, en cas de variations de la tension du secteur, une tension de sortie sensiblement constante et le convertisseur en courant alternatif (1; 30a, 30b, 30c) comportant au moins un transformateur (2), qui présente au moins un entrefer de dispersion et dont le secondaire comprend un stabilisateur de tension, qui comporte un enroulement de compensation (6), un enroulement de résonance (4) et un enroulement de sortie (5) ainsi qu'un condensateur de résonance (7) et un enroulement de compensation des harmoniques (3), l'entrée du convertisseur en courant alternatif (1; 30a, 30b, 30c) pouvant être raccordée à une batterie de bord (18), caractérisé en ce qu'entre la batterie de bord (18) et l'entrée du convertisseur en courant alternatif (1; 30a, 30b, 30c) et connecté une tension de sortie inférieure à la tension du secteur, de sorte qu'en cas de panne du secteur la tension de sortie du convertisseur en courant alternatif (1; 30a, 30b, 30c) est plus faible que sa tension nominale; en ce qu'en amont du convertisseur en courant alternatif (1; 30a, 30b, 30c) et sur le côté d'alimentation par le secteur, est montée une résistance d'entrée (11) ainsi qu'un contact (12) pontant la résistance d'entrée en étant branché en parallèle à celle-ci, ce contact (12) étant le contact de fermeture d'un relais raccordé à la sortie d'un comparateur (16); en ce que le comparateur (16) est relié, par soin entrée, à la sortie du convertisseur en courant alternatif (1; 30a, 30b, 30c) et délivre un signal quand la tension de sortie du convertisseur (1; 30a, 30b, 30c) a attient la valeur nominale de la tension de sortie, de sorte que le contact (12) du relais se ferme et en ce qu'il est prévu un capteur de tension de seuil (29), dont l'entrée est reliée au secteur et à la résistance d'entrée (11) et dont la sortie peut commander un contacteur (15) prévu en amont des moteurs (14), de sorte que les moteurs sont mis en marche quand la tension du secteur est appliquée en même temps que la résistance d'entrée (11) est court-circuitée.

FIG.1

FIG.2

0024 448

FIG.3

FIG.4